# EUROPEAN PATENT APPLICATION

(11) **EP 3 926 560 A1**
(43) Date of publication of application: **22.12.2021**
(21) Application number: 21179165.2
(22) Date of filing: 14.06.2021
(51) Int. Cl.: G06Q 10/06

(54) **INFORMATION PROCESSING DEVICE, INFORMATION PROCESSING METHOD, AND SYSTEM**

(30) Priority: 18.06.2020 JP 2020105155
(71) Applicant: TOYOTA JIDOSHA KABUSHIKI KAISHA, Toyota-shi, Aichi-ken 471-8571 (JP)
(72) Inventor: KYOCHIKA, Wataru, TOYOTA-SHI, AICHI-KEN, 471-8571 (JP); MATSUO, Riho, TOYOTA-SHI, AICHI-KEN, 471-8571 (JP); MIYAHARA, Kenta, TOYOTA-SHI, AICHI-KEN, 471-8571 (JP); KAKIHARA, Ryotaro, NAGOYA, AICHI, 460-0003 (JP)
(74) Representative: Cabinet Beau de Loménie

(57) **Abstract**

An information processing device (200) includes a processor (201) configured to acquire user information regarding each of users. The user information is information relating to a site that is a location where each of the users desires snow removal, and information relating to a completion timing that is a timing at which each of the users desires the snow removal to be completed. The processor (201) is configured to decide a dispatching schedule for dispatching a snow removal movable body (300) to the site, based on the user information regarding each of the users.

## Description

### BACKGROUND OF THE INVENTION

### 1. Field of the Invention

The present disclosure relates to an information processing device, an information processing method, and a system. The present disclosure is used in technology for snow removal using a snow removal movable body, for example.

### 2. Description of Related Art

Japanese Unexamined Patent Application Publication No. 2001-279628 discloses technology regarding control of a winter service vehicle. Also, WO 2009/090729 discloses technology regarding a navigation device that performs route searching taking snow removal states of roads into consideration.

### SUMMARY OF THE INVENTION

The present disclosure provides technology to perform snow removal of a location regarding which a user desires snow removal, at a suitable timing.

A first aspect of the present disclosure is an information processing device. The information processing device includes a processor configured to acquire user information regarding each of users. The user information is information relating to a site that is a location where each of the users desires snow removal, and information relating to a completion timing that is a timing at which each of the users desires the snow removal to be completed. The processor is configured to decide a dispatching schedule for dispatching a snow removal movable body to the site, based on the user information regarding each of the users.

In the first aspect, the processor may be configured to predict an amount of time required to perform snow removal of the site by the snow removal movable body, and the dispatching schedule may be decided based on the predicted amount of time required for the site.

In the first aspect, the processor may be configured to acquire snow information about at least one of an amount of snow precipitation and an amount of predicted snowfall in a predetermined region where the site is located, and the amount of time required may be predicted for the site based on the snow information.

In the first aspect, the processor may be configured to acquire size information relating to size of the site, and the amount of time required may be predicted for the site based on the size information.

In the first aspect, the processor may be configured to acquire the size information relating to the site based on map information of a predetermined region where the site is located.

In the first aspect, the processor may be configured to acquire information relating to a dump site for removed snow, corresponding to the site, and the amount of time may be predicted for the site based on the information relating to the dump site.

In the first aspect, the processor may be configured to receive the user information from a user terminal related to each of the users.

In the first aspect, the information processing device may include a storage device that stores, in advance, information relating to the site corresponding to each of the users. The processor may be configured to extract information relating to the site regarding each of the users from the storage device, and may be configured to acquire the user information regarding each of the users by receiving information relating to the completion timing for each of the users related to each of the users from a user terminal.

In the first aspect, the dispatching schedule may be a schedule related to a timing of the snow removal movable body visiting the site, and a work time of snow removal by the snow removal movable body at the site.

A second aspect of the present disclosure is an information processing method that is executed by a computer. The information processing method includes acquiring user information regarding each of users, and deciding a dispatching schedule for dispatching a snow removal movable body to the site, based on the user information regarding each of the users. The user information is information relating to a site that is a location where each of the users desires snow removal, and information relating to a completion timing that is a timing at which each of the users desires the snow removal to be completed.

In the second aspect, the information processing method may include predicting an amount of time required to perform snow removal of the site by the snow removal movable body, and the dispatching schedule may be decided based on the predicted amount of time required for the site.

In the second aspect, the information processing method may include acquiring snow information about at least one of an amount of snow precipitation and an amount of predicted snowfall in a predetermined region where the site is located, and the amount of time required may be predicted for the site based on the snow information.

In the second aspect, the information processing method may include acquiring size information relating to size of the site, and the amount of time required may be predicted for the site based on the size information.

In the second aspect, the size information relating to the site may be acquired based on map information of a predetermined region where the site is located.

In the second aspect, the information processing method may include acquiring information relating to a dump site for removed snow, corresponding to the site, and the amount of time may be predicted for the site based on the information relating to the dump site.

In the second aspect, the dispatching schedule may be a schedule related to a timing of the snow removal movable body visiting the site, and a work time of snow removal by the snow removal movable body at the site.

A third aspect of the present disclosure is a system. The system includes a snow removal movable body that is autonomously drivable, and an information processing device. The information processing device includes a processor configured to acquire user information regarding each of users, and the user information is information relating to a site that is a location where each of the users desires snow removal, and information relating to a completion timing that is a timing at which each of the users desires the snow removal to be completed.

The processor is configured to decide a dispatching schedule for dispatching the snow removal movable body to the site, based on the user information regarding each of the users, and to transmit, to the snow removal movable body, schedule information about the dispatching schedule that is decided. The snow removal movable body is configured to travel and to carry out snow removal work based on the schedule information received from the information processing device.

In the third aspect, the processor may be configured to predict an amount of time required to perform snow removal of the site by the snow removal movable body, and the dispatching schedule may be decided based on the amount of time required for the site that is predicted.

In the third aspect, the dispatching schedule may a schedule related to a timing of the snow removal movable body visiting the site, and a work time of snow removal by the snow removal movable body at the site.

According to the first aspect, the second aspect, and the third aspect of the present disclosure, snow removal of a location regarding which a user desires snow removal can be performed at a suitable timing.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a snow removal managing system according to an embodiment;
FIG. 2 is a diagram illustrating a schematic configuration of a managing server;
FIG. 3 is a block diagram schematically illustrating an example of functional configuration of each of a user terminal, the managing server, and a snow removal mobility device;
FIG. 4 is a diagram illustrating an example of a table configuration of user information;
FIG. 5 is a flowchart illustrating a flow of processing to generate schedule information;
FIG. 6 is a diagram illustrating an example of a table configuration of schedule information; and
FIG. 7 is a diagram illustrating an example of a table configuration of a user information database according to a second modification of the embodiment.

### DETAILED DESCRIPTION OF EMBODIMENTS

Generally, in regions where snow removal is necessary, snow removal is performed by winter service vehicles regarding public roads. However, locations that need snow removal are not limited to public roads. There are instances in which snow removal is desired in various locations, such as on property of individuals, premises of facilities, and so forth. Accordingly, using a snow removal mobility device to perform snow removal at various locations in response to user desires is conceivable.

An information processing device according to the first aspect of the present disclosure is a device that manages a snow removal mobility device that is dispatched based on a snow removal request from a user. In the information processing device, a control unit acquires user information for each of a plurality of users who desire snow removal. The user information here includes information relating to the site, which is the location regarding which each user desires snow removal. Sites are, for example, properties of users (homes, etc.), premises of facilities related to users, and so forth. The user information also includes completion timing, which is the timing at which each user desires completion of snow removal.

In the information processing device, the control unit decides a dispatching schedule for dispatching the snow removal mobility device to each site, based on user information of each of the users. Note that the dispatching schedule includes, for example, the timing of the snow removal mobility device visiting each site, and the work time for snow removal by the snow removal mobility device at each site.

By deciding the dispatching schedule by the information processing device, the snow removal mobility device can be dispatched to each site so that snow removal is completed at each site at a timing according to the desire of each user. Accordingly, snow removal at various locations can be performed using the snow removal mobility device in accordance with requests from users, at suitable timings.

A specific embodiment of the present disclosure will be described below with reference to the drawings. The dimensions, materials, shapes, and relative placements and so forth of components described in the present embodiment do not limit the technical scope of the present disclosure thereto alone, unless specifically stated so.

### Embodiment

### System Overview

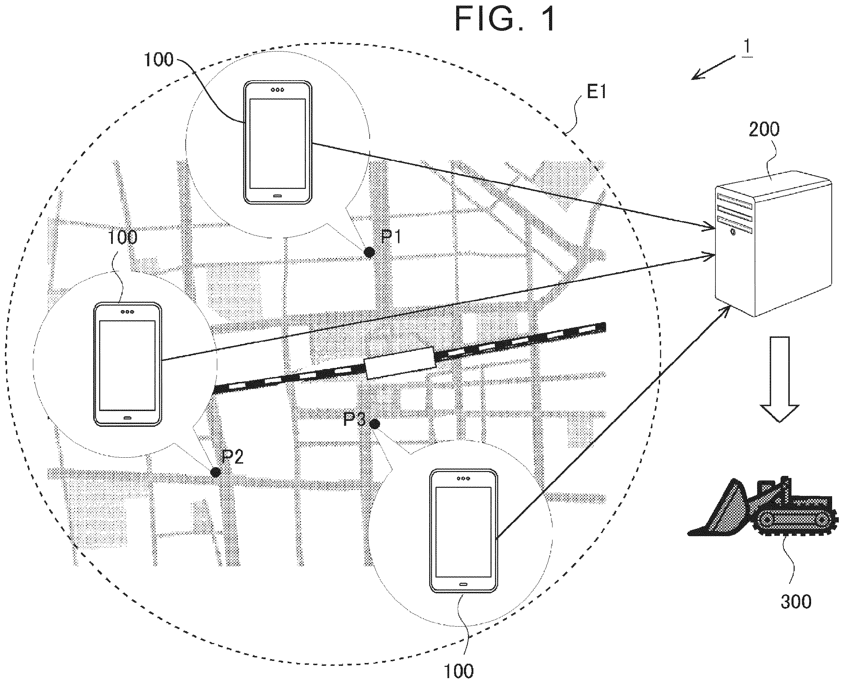

FIG. 1 is a diagram illustrating a schematic configuration of a snow removal managing system according to the present embodiment. The snow removal managing system is a system for using a snow removal mobility device to perform snow removal in response to snow removal requests from users within a predetermined region. The snow removal managing system 1 is configured to include user terminals 100 related to each of the users, a managing server 200, and a snow removal mobility device 300 (hereinafter may be referred to simply as "mobility device").

A user of the snow removal managing system 1 according to the present embodiment is a person who desires snow removal at a site within a predetermined region E1. The site is, for example, the home of the user or premises of a predetermined facility that the user manages. FIG. 1 illustrates sites P1 through P3. Also, in the snow removal managing system 1, the user terminals 100 and the managing server 200 are connected to each other through a network. For this network, a wide area network (WAN) that is a global-scale telecommunication network, such as the Internet or the like, or a telephone communication network such as a network for cellular phones, for example, may be employed. Also, examples of the user terminals 100 include personal computers, smartphones, and tablet computers. The managing server 200 receives user information that is information relating to snow removal requests from users. The user information is transmitted from the user terminals 100 via the network. Thus, the managing server 200 accepts snow removal requests from the users.

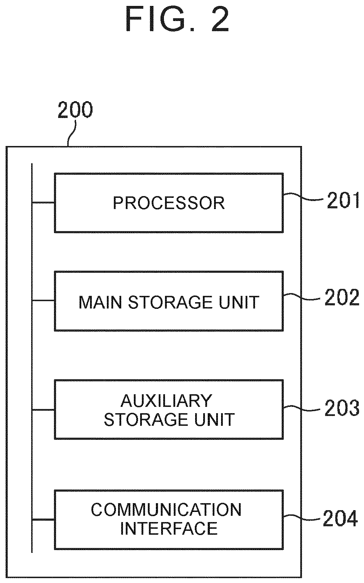

The managing server 200 is a server device that manages the mobility device 300. FIG. 2 is a diagram illustrating a schematic configuration of the managing server 200. The managing server 200 is configured to include a typical computer. The computer making up the managing server 200 has a processor 201, a main storage unit 202, an auxiliary storage unit 203, and a communication interface 204.

The processor 201 here is, for example, a central processing unit (CPU) or a digital signal processor (DSP). The main storage unit 202 is, for example, random access memory (RAM). The auxiliary storage unit 203 is, for example, read only memory (ROM), a hard disk drive (HDD), or flash memory. The auxiliary storage unit 203 may also include removable media (portable recording media). Examples of removable media here include Universal Serial Bus (USB) memory, Secure Digital (SD) cards, and disc recording media such as compact discs (CD)-ROM, Digital Versatile Discs (DVD), Blu-ray Discs, and so forth. Examples of the communication interface 204 include a local area network (LAN) interface board, and a wireless communication circuit for wireless communication.

The auxiliary storage unit 203 stores an operating system (OS), various types of programs, various types of information tables, and so forth. Control, such as later-described deciding of dispatching schedules for the mobility device 300, and so forth, is realized by the processor 201 loading programs stored in the auxiliary storage unit 203 to the main storage unit 202 and executing the programs. Note however, that part or all of functions of the managing server 200 may be realized by a hardware circuit such as an application-specific integrated circuit (ASIC) or a field-programmable gate array (FPGA). Also, there is no need for the managing server 200 to be realized by a single physical configuration, and may be configured of a plurality of mutually-cooperating computers. Note that in the present embodiment, the managing server 200 is an example of an "information processing device" according to the present disclosure.

The managing server 200 that has accepted snow removal requests from each of the users decides a dispatching schedule for dispatching the mobility device 300 to each of the sites. Now, in the snow removal managing system 1, the mobility device 300 and the managing server 200 are also connected to each other via a network, in the same way as each of the user terminals 100 and the managing server 200 being connected. The managing server 200 transmits schedule information including the dispatching schedule that has been decided to the mobility device 300 via the network.

The mobility device 300 is a vehicle provided with equipment necessary for snow removal work, for example (e.g., a snow removal tool such as a snowplow). The mobility device 300 is capable of autonomous driving. The mobility device 300 is also capable of autonomously carrying out snow removal work. The mobility device 300 then autonomously travels to each of the sites to be visited, based on the schedule information received from the managing server 200. The mobility device 300 further carries out snow removal work at the sites based on the schedule information.

### Functional Configuration

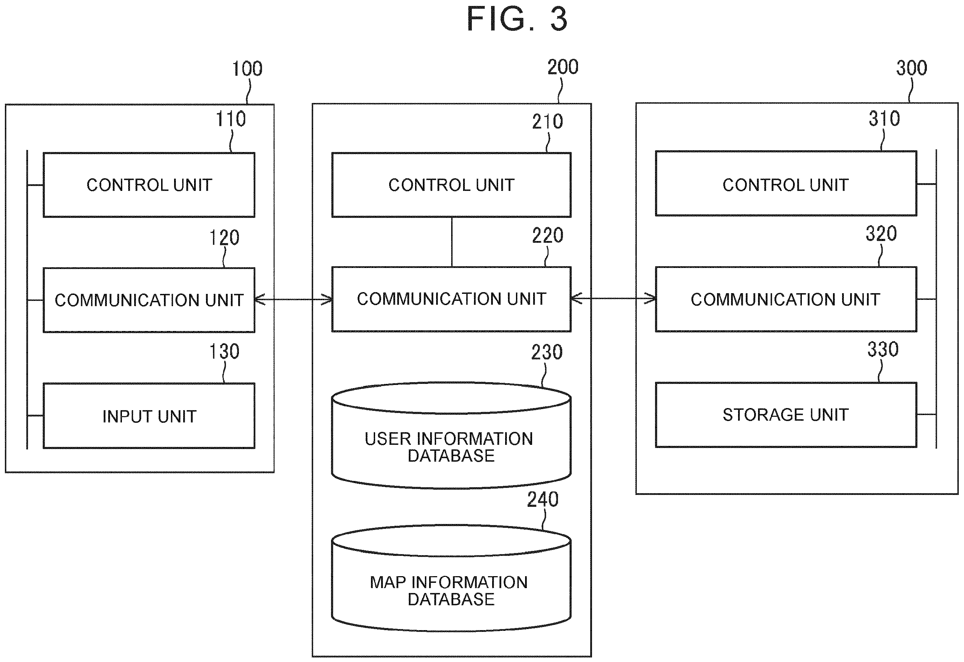

Next, the functional configurations of each of the user terminal 100, the managing server 200, and the mobility device 300, making up the snow removal managing system 1 according to the present embodiment, will be described with reference to FIG. 3. FIG. 3 is a block diagram schematically illustrating an example of the functional configuration of each of the user terminal 100, the managing server 200, and the mobility device 300.

### User Terminal

The user terminal 100 has a control unit 110, a communication unit 120, and an input unit 130. The control unit 110 has a function of performing computation processing for controlling the user terminal 100. The control unit 110 can be realized by the processor that the user terminal 100 is provided with.

The communication unit 120 has functions of connecting the user terminal 100 to a network. The communication unit 120 can be realized by the communication interface that the user terminal 100 is provided with. The communication unit 120 can perform communication with other devices including the managing server 200, over a network, by using a mobile communication service such as third generation (3G), Long-Term Evolution (LTE), or the like, for example. The control unit 110 performs processing of transmitting user information, generated based on information input at the time of the user requesting snow removal, to the managing server 200 via the communication unit 120, which will be described later.

The input unit 130 has functions of accepting input operations performed by the user. For example, the input unit 130 is configured to include a touchscreen. When requesting snow removal, the user activates a predetermined application in the user terminal 100. Thus, the user is able to input operations to the input unit 130.

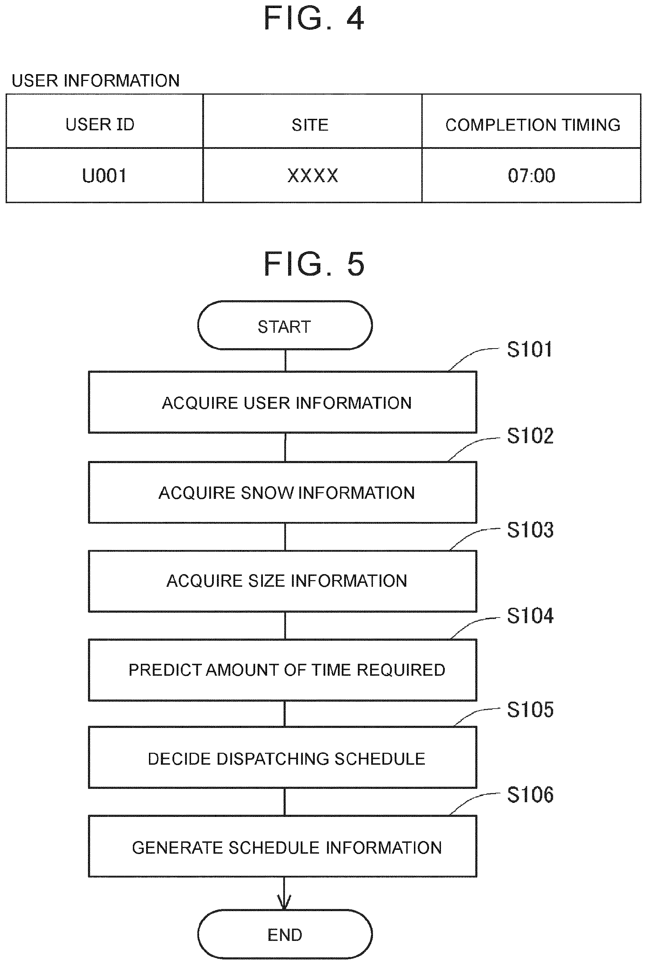

The control unit 110 generates user information based on information that the user inputs to the input unit 130. FIG. 4 is a diagram illustrating an example of a table configuration of user information generated by the user terminal 100. The user information has a user identification (ID) field, a site field, and a completion timing field, as illustrated in FIG. 4. A user ID, which is identification information for identifying a user, is input to the user ID field. Information relating to the site regarding which the user desires snow removal is input to the site field. Information input to the site field is, for example, the address of the site. Information relating to the completion timing, which is the timing at which the user desires the snow removal to be completed, is input to the completion timing field. Now, when the site is the home of the user, the user conceivably might desire the snow removal to be completed at a time of day that the user plans to leave the house (or immediately before). Also, when the site is a predetermined facility that is the destination of the user, the user conceivably might desire the snow removal to be completed at a time of day that the user plans to reach the predetermined facility (or immediately before). Such information relating to the completion timing is input to the completion timing field.

### Managing Server

The managing server 200 has a control unit 210, a communication unit 220, a user information database 230, and a map information database 240. The control unit 210 has functions of performing computation processing to control the managing server 200. The control unit 210 can be realized by the processor 201.

The communication unit 220 has functions of connecting the managing server 200 to a network. The communication unit 220 can be realized by the communication interface 204. The control unit 210 performs processing of receiving user information transmitted from the user terminals 100 via the communication unit 220. The control unit 210 also performs processing of storing user information received from the user terminals 100 in the user information database 230. The user information database 230 is constructed in the auxiliary storage unit 203 of the managing server 200 by a program of a database management system being executed by the processor 201.

The map information database 240 stores map information regarding the predetermined region E1 including each of the sites in advance. The map information stored in this map information database 240 includes size information regarding the size (e.g., site area) of each home, facility, or the like, that might become a site, besides information regarding roads which might become traveling routes for the mobility device 300.

The control unit 210 decides a dispatching schedule for dispatching the mobility device 300 to each of the sites for snow removal, based on the user information for each user stored in the user information database 230. Further, the control unit 210 performs processing of transmitting the schedule information including the dispatching schedule that has been decided to the mobility device 300, via the communication unit 220. Note that details of the method of deciding the dispatching schedule at the managing server 200 will be described later.

### Snow Removal Mobility Device

The mobility device 300 has a control unit 310, a communication unit 320, and a storage unit 330. Now, the mobility device 300 is provided with a traction mechanism that causes the mobility device 300 to travel, including a motor that is a prime mover. The mobility device 300 is also provided with an actuator to move the snow removal tool. The control unit 310 has a function of controlling the traction mechanism and the actuator. The control unit 310 can be realized by a processor of a computer that the mobility device 300 is provided with.

The mobility device 300 is provided with a sensor and a camera for sensing the surrounding conditions. The mobility device 300 is also provided with a Global Positioning System (GPS) receiver for acquiring the current location of itself. The control unit 310 causes the mobility device 300 to autonomously travel by controlling the traction mechanism based on information acquired by these various types of equipment, when the mobility device 300 travels toward the site. The control unit 310 also causes the mobility device 300 to carry out snow removal work by controlling the actuator based on information acquired by these various types of equipment at the site. Note that known methods can be employed for the method of causing the mobility device 300 to autonomously travel and of causing the mobility device 300 to perform snow removal work.

The communication unit 320 has functions of connecting the mobility device 300 to a network. The communication unit 320 can be realized by a communication interface that the mobility device 300 is provided with. The communication unit 320 can perform communication with other devices including the managing server 200, over a network, by using a mobile communication service in the same way as the communication unit 120 of the user terminal 100. The control unit 310 performs processing of receiving schedule information transmitted from the managing server 200 via the communication unit 320.

The storage unit 330 has a function of storing information. The storage unit 330 can be realized by a storage medium such as flash memory, removable media, or the like. The control unit 310 performs processing of storing schedule information received from the managing server 200 in the storage unit 330. The control unit 310 then generates a travel plan for causing the mobility device 300 to travel to each of the sites, and a work plan for carrying out the snow removal work at each of the sites, based on the schedule information stored in the storage unit 330. The control unit 310 further causes the mobility device 300 to autonomously travel based on the generated travel plan. The control unit 310 also causes the mobility device 300 to carry out the snow removal work at each of the sites, based on the generated work plan.

### Generating Schedule Information

Next, processing for generating schedule information that is carried out at the managing server 200 will be described with reference to FIG. 5. FIG. 5 is a flowchart illustrating a flow of processing for generating the schedule information. This flow is executed by the control unit 210 of the managing server 200.

In this flow, first, in S101, user information is acquired for each user stored in the user information database 230. Thus, the sites and the completion timings for each of the users desiring snow removal within the predetermined region E1 are acquired. Next, in S102, snow information is acquired. The snow information here is information including the amount of snow precipitation in the predetermined region E1 in which the sites are each located. Also, the snow information may be information including the predicted snowfall in the predetermined region E1. Such snow information can be received from a server device that provides information relating to weather, separate from the managing server 200, via a network.

Next, in S103, information regarding the size of each site included in the user information for each user is acquired. The size information for each site is acquired from map information stored in the map information database 240. Next, in S104, the amount of time required for the mobility device 300 to perform snow removal of sites is predicted. The amount of time required for each site is predicted here based on the snow information acquired in S102 and the size information of each site acquired in S103. For example, the greater the amount of snow precipitation or the predicted snowfall is in the snow information for the predetermined region E1, the longer the amount of time required for each site can be expected to be. Also, the larger the site is, i.e., the larger the premises where snow removal is to be performed, the longer the amount of time required for that site can be expected to be. Accordingly, the amount of time required for each site can be predicted based on snow information and size information.

Next, in S105, the dispatching schedule for dispatching the mobility device 300 to each site for snow removal is decided. Now, the dispatching schedule is decided based on user information of each user and the amount of time required at each of the sites. That is to say, the order in which the mobility device 300 visits each of the sites is decided so that the snow removal work at each of the sites is completed at the completion timing that each of the users desires the snow removal to be completed by. The timing of the mobility device 300 visiting each of the sites, and the amount of work time for snow removal by the mobility device 300 at each of the sites are also decided as the dispatching schedule.

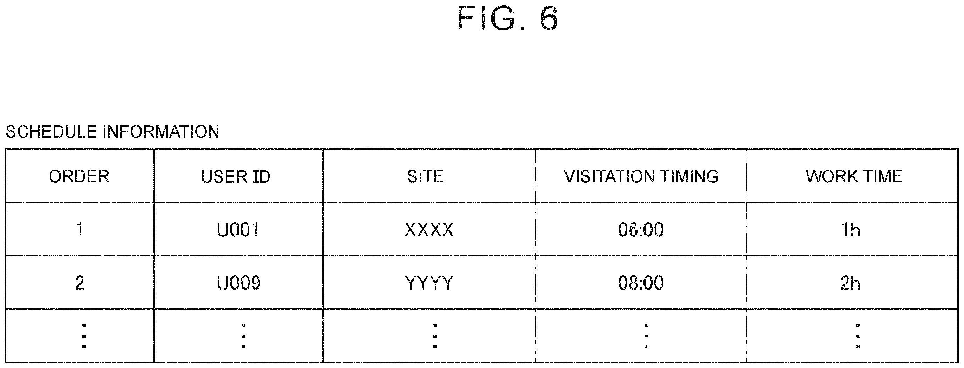

Next, in S106, schedule information including the dispatching schedule decided in S105 is generated. FIG. 6 is a diagram illustrating an example of a table configuration of schedule information. The schedule information has an order field, a user ID field, a site field, a visitation timing field, and a work time field, as shown in FIG. 6. The order in which the mobility device 300 is to visit the sites is input to the order field. The user ID and information regarding the site, which are included in the user information, are input to the user ID field and the site field, respectively. Information regarding the timing of the mobility device 300 to visit each site is input to the visitation timing field. Information regarding the work time for snow removal by the mobility device 300 at each site is input to the work time field. When schedule information is generated in S106, execution of this flow ends. The generated schedule information is then transmitted to the mobility device 300.

By the generated schedule information being transmitted to the mobility device 300 as described above, the mobility device 300 can be dispatched to each of the sites so that the snow removal at each of the sites is completed at a timing corresponding to that desired by each of the users. Now, in a situation in which snow removal of a certain site is completed a considerable amount of time before the completion timing that the user desires, and it snows between the time of completion of snow removal and the desired completion timing, the site will be under snow again. As a result, the site may be in a state with snow accumulated at the originally-intended completion timing. Accordingly, it is desirable to complete the snow removal at each site at a timing corresponding to that desired by each user. According to the snow removal managing system 1 of the present embodiment, snow removal of various locations can be performed at suitable timings using the mobility device 300 in accordance with requests from users.

### First Modification

A first modification of the snow removal managing system according to the present embodiment will be described below. There are cases in which a snow dump site for removed snow (hereinafter may be referred to simply as "dump site") becomes necessary when the mobility device 300 performs snow removal work at each of the sites. Accordingly, in the present modification, when the control unit 210 of the managing server 200 decides the dispatching schedule, information regarding a dump site corresponding to each site is acquired.

At this time, each user terminal 100 may transmit information relating to the dump site corresponding to the site to the managing server 200, as user information. In this case, each user inputs a dump site corresponding to the site to the user terminal 100. Also, information relating to the corresponding dump site is stored in the user information database 230 of the managing server 200 along with information relating to the site. The control unit 210 then acquires information relating to the dump site from the user information database 230, along with the information relating to the site. Also, information relating to a corresponding dump site may be stored in advance in the map information database 240 of the managing server 200, for each location which might become a site. In this case, the control unit 210 acquires information relating to dump sites from the map information database 240.

Now, the amount of time required for the mobility device 300 to perform snow removal at a site may conceivably differ depending on the location of the dump site. For example, when a dump site exists within the premises of the site, the amount of time required for this site is conceivably short as compared with when the dump site is at a location away from the site. Accordingly, in the present modification, the control unit 210 predicts the amount of time required based on information relating to dump sites, in addition to the snow information and size information such as described above. Accordingly, the amount of time required for the mobility device 300 to perform snow removal at each of the sites can be predicted with higher precision.

### Second Modification

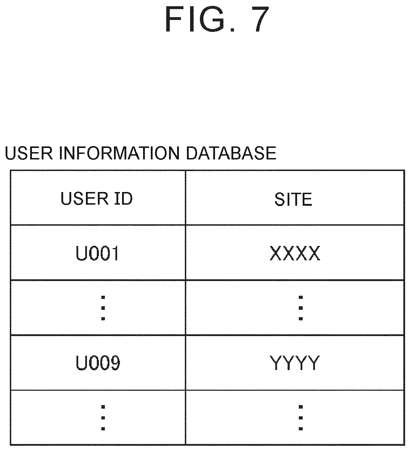

Next, a second modification of the snow removal managing system according to the present embodiment will be described. In the present modification, in the managing server 200, the user ID of each user that uses this system and information relating to a site registered by each user are stored in the user information database 230 in a state associated with each other, in advance, as illustrated in FIG. 7. At this time, a user desiring snow removal enters only the completion timing to the input unit 130 of the user terminal 100. In such a case, the control unit 210 of the managing server 200 can acquire user information for each of the users, by extracting information relating to the site for each user from the user information database 230, and receiving information relating to completion timing for each user from each user terminal 100.

### Other Embodiments

The above embodiment is but an example, and various alterations may be made in the present disclosure without departing from the essence and scope thereof. Also, the processing and means described in the present disclosure may be freely combined and carried out, insofar as there is no technical contradiction.

Also, processing described as being performed by one device may be shared and carried out by a plurality of devices. Alternatively, processing described as being performed by different devices may be carried out by a single device. A type of hardware configuration (server configuration) that realizes each function in a computer system can be flexibly changed.

The present disclosure can also be realized by a computer program implementing the functions described in the above embodiment being supplied to a computer, and one or more processors that the computer has reading and executing the program. Such a computer program may be provided to the computer by a non-transient computer-readable storage medium connectable to a system bus of the computer, or may be provided to the computer via a network. Examples of the non-transient computer-readable storage medium include optional types of disks such as magnetic disks (floppy (registered trademark) disks, HDDs, and so forth), optical discs (CD-ROM and DVD discs, Blu-ray discs, and so forth), etc., and optional types of media suitable for storing electronic commands such as ROM, RAM, erasable programmable ROM (EPROM), electrically erasable programmable ROM (EEPROM), magnetic cards, flash memory, optical cards, and so forth.

## Claims

1. An information processing device (200) comprising a processor (201) configured to acquire user information regarding each of users, wherein:
the user information is information relating to a site that is a location where each of the users desires snow removal, and information relating to a completion timing that is a timing at which each of the users desires the snow removal to be completed; and
the processor (201) is configured to decide a dispatching schedule for dispatching a snow removal movable body (300) to the site, based on the user information regarding each of the users.

2. The information processing device (200) according to claim 1, wherein:
the processor (201) is configured to predict an amount of time required to perform snow removal of the site by the snow removal movable body (300); and
the dispatching schedule is decided based on the predicted amount of time required for the site.

3. The information processing device (200) according to claim 2, wherein:
the processor (201) is configured to acquire snow information about at least one of an amount of snow precipitation and an amount of predicted snowfall in a predetermined region where the site is located; and
the amount of time required is predicted for the site based on the snow information;
and/or
the processor (201) is configured to acquire size information relating to size of the site; and
the amount of time required is predicted for the site based on the size information.

4. The information processing device (200) according to claim 3, wherein the processor (201) is configured to acquire the size information relating to the site based on map information of a predetermined region where the site is located.

5. The information processing device (200) according to any of claims 2 to 4, wherein:
the processor (201) is configured to acquire information relating to a dump site for removed snow, corresponding to the site; and
the amount of time is predicted for the site based on the information relating to the dump site.

6. The information processing device (200) according to any of claims 1 to 5, wherein the processor (201) is configured to receive the user information from a user terminal (100) related to each of the users.

7. The information processing device (200) according to any of claims 1 to 5, further comprising a storage device (203) that stores, in advance, information relating to the site corresponding to each of the users, wherein
the processor (201) is configured to
extract information relating to the site regarding each of the users from the storage device (203), and
acquire the user information regarding each of the users by receiving information relating to the completion timing for each of the users related to each of the users from a user terminal (100).

8. The information processing device (200) according to any of claims 1 to 7, wherein the dispatching schedule is a schedule related to a timing of the snow removal movable body (300) visiting the site, and a work time of snow removal by the snow removal movable body (300) at the site.

9. An information processing method that is executed by a computer, the method comprising:
acquiring user information regarding each of users, the user information being information relating to a site that is a location where each of the users desires snow removal, and information relating to a completion timing that is a timing at which each of the users desires the snow removal to be completed; and
deciding a dispatching schedule for dispatching a snow removal movable body (300) to the site, based on the user information regarding each of the users.

10. The information processing method according to claim 9, further comprising predicting an amount of time required to perform snow removal of the site by the snow removal movable body (300), wherein the dispatching schedule is decided based on the predicted amount of time required for the site.

11. The information processing method according to claim 10, further comprising one or more of:
acquiring snow information about at least one of an amount of snow precipitation and an amount of predicted snowfall in a predetermined region where the site is located, wherein the amount of time required is predicted for the site based on the snow information; and
acquiring size information relating to size of the site, wherein the amount of time required is predicted for the site based on the size information.

12. The information processing method according to claim 11, wherein the size information relating to the site is acquired based on map information of a predetermined region where the site is located.

13. The information processing method according to any of claims 10 to 12, further comprising acquiring information relating to a dump site for removed snow, corresponding to the site, wherein the amount of time is predicted for the site based on the information relating to the dump site.

14. The information processing method according to any of claims 9 to 13, wherein the dispatching schedule is a schedule related to a timing of the snow removal movable body (300) visiting the site, and a work time of snow removal by the snow removal movable body (300) at the site.

15. A system (1) comprising:
a snow removal movable body (300) that is autonomously drivable; and
an information processing device (200), wherein:
the information processing device (200) includes a processor (201) configured to acquire user information regarding each of users;
the user information is information relating to a site that is a location where each of the users desires snow removal, and information relating to a completion timing that is a timing at which each of the users desires the snow removal to be completed;
the processor (201) is configured to decide a dispatching schedule for dispatching the snow removal movable body (300) to the site, based on the user information regarding each of the users, and to transmit, to the snow removal movable body (300), schedule information about the dispatching schedule that is decided; and
the snow removal movable body (300) is configured to travel and to carry out snow removal work based on the schedule information received from the information processing device (200).

16. The system (1) according to claim 15, wherein:
the processor (201) is configured to predict an amount of time required to perform snow removal of the site by the snow removal movable body (300); and
the dispatching schedule is decided based on the predicted amount of time required for the site.

17. The system according to claim 15 or 16, wherein the dispatching schedule is a schedule related to a timing of the snow removal movable body (300) visiting the site, and a work time of snow removal by the snow removal movable body (300) at the site.
